# EUROPEAN PATENT SPECIFICATION

(11) **EP 3 657 108 B1**
(45) Date of publication and mention of the grant of the patent: **28.06.2023**
(21) Application number: 19209307.8
(22) Date of filing: 15.11.2019
(51) Int. Cl.: F25D 25/02, B32B 15/04, F25D 31/00, A47J 47/02

(54) **STORAGE CONTAINER AND REFRIGERATOR HAVING THE SAME**
LAGERBEHÄLTER UND KÜHLSCHRANK DAMIT
CONTENEUR DE STOCKAGE ET RÉFRIGÉRATEUR EN DISPOSANT

(30) Priority: 22.11.2018 KR 20180145554
(43) Date of publication of application: 27.05.2020
(73) Proprietor: LG Electronics Inc., SEOUL, 07336 (KR)
(72) Inventor: JUNG, Hyungi, 08592 Seoul (KR); LEE, Sangyong, 08592 Seoul (KR); JEONG, Seokjae, 08592 Seoul (KR)
(74) Representative: Ter Meer Steinmeister & Partner

(56) References cited:
- JP-A- H04 147 838
- JP-A- H08 198 338
- JP-A- 2005 053 173
- JP-B1- 3 950 904
- JP-B2- 4 040 986
- KR-B1- 100 738 719
- KR-B1- 101 021 417

## Description

### BACKGROUND

### 1. Field

The present disclosure relates to a storage container and a refrigerator having the same.

### 2. Description of Related Art

In general, a refrigerator is a home appliance that allows to store food at a low temperature in an internal storage chamber that is shielded by a door. In detail, the refrigerator has a refrigerator body having a storage chamber formed therein, a door for opening and closing the storage chamber, and a refrigeration cycle apparatus for providing cold air to the storage chamber.

In general, the refrigeration cycle apparatus may include a vapor compression type refrigeration cycle apparatus including a compressor for compressing a refrigerant, a condenser in which the refrigerant emits heat and is condensed, an expansion device in which the refrigerant is depressurized and expanded, and an evaporator in which the refrigerant absorbs latent heat from the surrounding and is evaporated.

Further, the refrigerator includes at least one storage container accommodated in the storage chamber. The storage container may accommodate food therein. For example, the storage container may accommodate food such as kimchi.

A refrigerator having such a storage container is described in KR 10-2016-0024231. The storage container has a container body having an inner space defined therein, and a container cover coupled to the container body. In this connection, the container body is made of stainless. Such storage container is heavy. Accordingly, in general, there is a problem that n user using the storage container and the refrigerator including the same has inconvenience during operating and using the refrigerator.

JP H08 198338 A describes a food container. A container body is formed by using an existing container material made of wood, plastic, stainless, copper, or the like. A titanium isolating layer is fitted into the container body.

JP 4 040986 B2 relates to a rice cooker. The rice cooker is provided with a main body, a lid body covering an open-top section of the main body, a removable inner pot contained in the main body and an induction heating coil which heats the inner pot. At least an outside wall of the main body is formed of a titanium material or titanium alloy.

JP 2005 053173 A relates to a storage container. The storage container comprises a lower vessel which is an aluminum cup having the outer surface coated with lacquer, a bottom seat which is a titanium disc, a core which is a titanium cylinder, a main body in which the core is fitted to the lower vessel to protrude part of the core beyond the lower vessel, an inner lid which closes the tip of the core projecting beyond the lower vessel, and a top cover made of aluminum and having the outer surface coated with lacquer to make the core abut against the lower vessel to close.

KR 101 021 417 B1) relates to a cooker which includes earthenware covered with a metal layer and a ceramic coating layer.

### SUMMARY

An object of the present invention is to provide a storage container having a lower weight.

A main idea is to provide a storage container having an inner layer made of titanium and a refrigerator having such container.

Further, an object of the present invention is to provide a storage container having an inner layer made of titanium and an outer layer made of aluminum and thus having a reduced weight and a reduced production cost, and a refrigerator having the container.

The objects are solved by the features of the independent claims. Preferred embodiments are given in the dependent claims.

A storage container according to the present disclosure preferably has a container body having a storage space for accommodating food, and a container cover is coupled to one side of the container body for opening and closing the storage space.

The container body includes an inner layer forming an inner face of the storage space and an outer layer combined with the inner layer and forming an outer face of the storage space.

The inner layer is made of titanium and the outer layer is made of aluminum.

Further, the outer layer may be thicker than the inner layer.

Further, the container body includes a coating layer covering the outer layer or the inner layer. The coating layer may be formed of ceramics.

The storage container having the above configuration and the refrigerator having the same according to an embodiment of the present disclosure, following effects may be realized.

The storage container has an inner layer made of titanium and an outer layer made of aluminum and thus has a reduced weight and a reduced production cost. Accordingly, there is an advantage that the user's convenience can be increased.

As the inner layer of the container body is formed using titanium, there is an advantage that the container has excellent corrosion resistance properties. Further, the titanium is harmless to the human body and is a human-friendly material.

Further, as the outer layer of the container body is formed using aluminum, there is an advantage that a variety of coating layers may be formed on the outer layer. In addition, as the coating layer is formed thereon, various appearances may be formed and a strength thereof may be supplemented.

### BRIEF DESCRIPTION OF THE DRAWINGS

FIG. 1 is a view showing a refrigerator according to an embodiment of the present disclosure.
FIG. 2 is a view showing a storage container disposed in the refrigerator according to an embodiment of the present disclosure.
FIG. 3 illustrates a storage container according to an embodiment of the present disclosure.
FIG. 4 is an exploded view showing the storage container according to an embodiment of the present disclosure.
FIG. 5 is a view showing a cross section taken along a line V-V' of FIG. 4.
FIG. 6 is a view showing a manufacturing process of the storage container according to an embodiment of the present disclosure.
FIG. 7 is a view showing another embodiment of a cross section taken along a line V-V' of FIG. 4.

### DETAILED DESCRIPTIONS

For simplicity and clarity of illustration, elements in the figures are not necessarily drawn to scale. The same reference numbers in different figures denote the same or similar elements, and as such perform similar functionality. Also, descriptions and details of well-known steps and elements are omitted for simplicity of the description. Furthermore, in the following detailed description of the present disclosure, numerous specific details are set forth in order to provide a thorough understanding of the present disclosure. However, it will be defined that the present disclosure may be practiced without these specific details. In other instances, well-known methods, procedures, components, and circuits have not been described in detail so as not to unnecessarily obscure aspects of the present disclosure. Unless otherwise defined, all terms including technical and scientific terms used herein have the same meaning as commonly defined by one of ordinary skill in the art to which this inventive concept belongs. It will be further defined that terms, such as those defined in commonly used dictionaries, should be interpreted as having a meaning that is consistent with their meaning in the context of the relevant art and will not be interpreted in an idealized or overly formal sense unless expressly so defined herein.

The terminology used herein is for the purpose of describing particular embodiments only and is not intended to be limiting of the present disclosure. As used herein, the singular forms "a" and "an" are intended to include the plural forms as well, unless the context clearly indicates otherwise. It will be further defined that the terms "comprises", "comprising", "includes", and "including" when used in this specification, specify the presence of the stated features, integers, operations, elements, and/or components, but do not preclude the presence or addition of one or more other features, integers, operations, elements, components, and/or portions thereof. As used herein, the term "and/or" includes any and all combinations of one or more of the associated listed items. It will be defined that, although the terms "first", "second", "third", and so on may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure. In addition, it will also be defined that when a first element or layer is referred to as being present "on" a second element or layer, the first element may be disposed directly on the second element or may be disposed indirectly on the second element with a third element or layer being disposed between the first and second elements or layers. In addition, it will also be defined that when an element or layer is referred to as being "between" two elements or layers, it can be the only element or layer between the two elements or layers, or one or more intervening elements or layers may also be present.

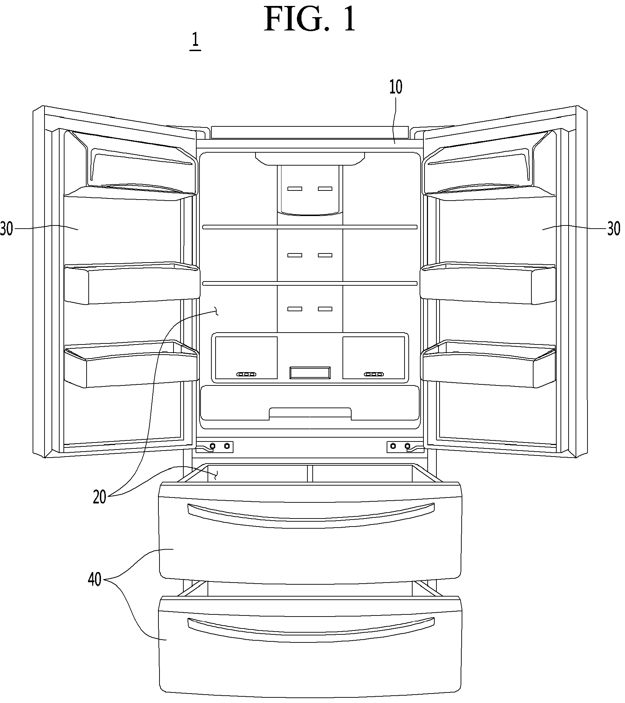

FIG. 1 is a view showing a refrigerator according to an embodiment of the present disclosure.

As shown in FIG. 1, a refrigerator 1 according to the idea of the present disclosure includes a refrigerator body 10 in which a storage chamber 20 is formed. The storage chamber 20 may be formed in various shapes and numbers. For example, referring to FIG. 1, a plurality of the storage chamber 20 may be partitioned vertically.

Further, the refrigerator 1 has a refrigerator door 30 for opening and closing the storage chamber 20. The refrigerator door 30 is hinge-coupled to the refrigerator body 10 and is pivotable. For example, referring to FIG. 1, a pair of the refrigerator doors 30 may be disposed to open and close the storage chamber 20.

Further, in the refrigerator 1, a drawer 40 disposed in the storage chamber 20 may be disposed. The drawer 40 may slide in the refrigerator body 10. For example, referring to FIG. 1, the drawer 40 may be inserted into or withdrawn from the storage chamber 20.

Further, the refrigerator 1 includes a storage container 50 in which food is accommodated. The storage container 50 may be placed in the storage chamber 20. Further, the storage container 50 may be formed in various shapes and numbers depending on the application.

Hereinafter, a storage container 50 disposed in the storage chamber 20 will be described.

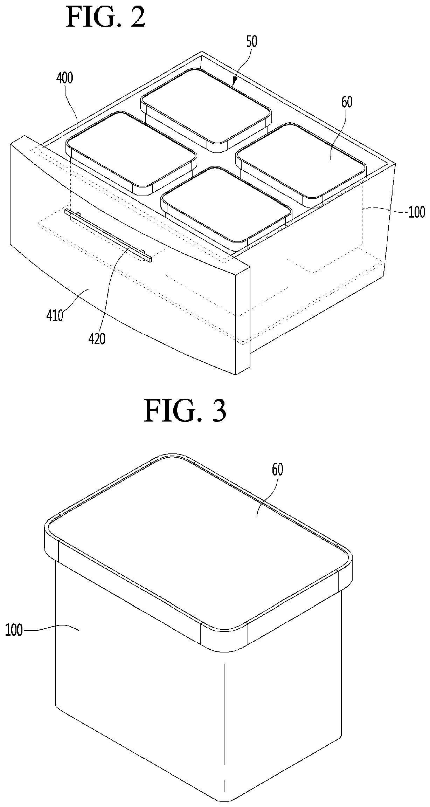

FIG. 2 is a view showing a storage container disposed in the refrigerator according to an embodiment of the present disclosure.

As shown in FIG. 2, the storage container 50 may be accommodated and disposed in the drawer 40. The drawer 40 includes a drawer body 400 that is retractably or extendably disposed in the storage chamber 20 and a drawer front part 410 that is coupled to a front of the drawer body 400.

The drawer body 400 may has a space defined therein in which the storage container 50 is accommodated. In FIG. 2, four storage containers 50 are shown as accommodated, but this is illustrative and the present disclosure is not limited thereto. Further, the drawer body 400 may has a rail (not shown) formed on an outer face thereof. The drawer body may be withdrawn from or inserted into the storage chamber 20 using the rail.

The drawer front part 410 may be defined as a part forming an appearance when the drawer body 400 is accommodated in the storage chamber 20. That is, the drawer front part 410 may be defined as a part forming a portion of an appearance of the refrigerator 1. At the front of the drawer front part 410, a handle 420 that the user can grip is formed.

Accordingly, the user can move the drawer 40 by holding the handle 420 and applying an external force to thereto. In addition, the user may use the handle to withdraw the storage container 50 contained in the drawer 40 or the food contained in the storage container 50.

An arrangement of the storage container 50 and a shape of the drawer 400 may not be limited thereto. Further, the storage container 50 may be housed in the storage chamber 20. Further, depending on the user's needs, the storage container 50 may be placed independently of the refrigerator 10.

Hereinafter, the storage container 50 will be described in detail.

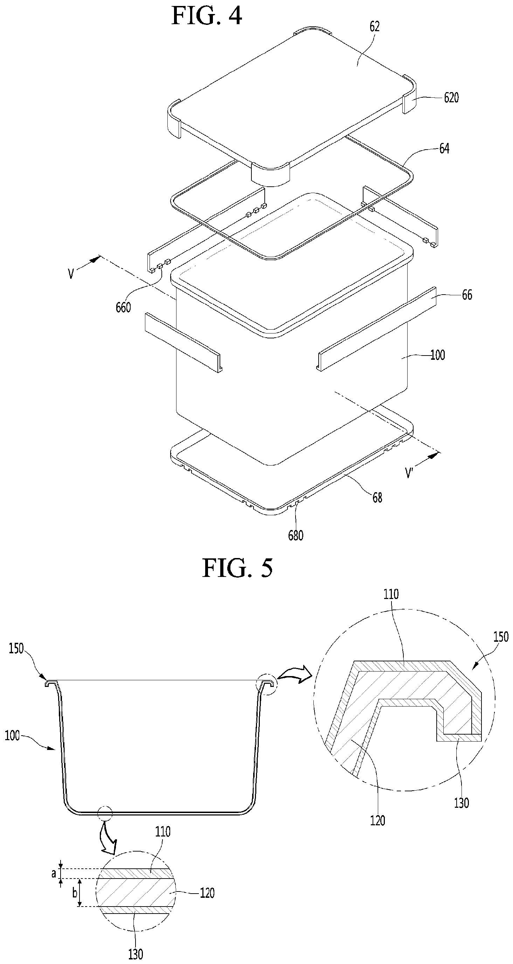

FIG. 3 is a view showing a storage container according to an embodiment of the present disclosure. FIG. 4 is a view showing an exploded storage container according to an embodiment of the present disclosure.

As shown in FIG. 3 and FIG. 4, the storage container 50 includes a container body 100 and a container cover 60 coupled thereto.

In detail, the container body 100 is defined as a component having a storage space defined therein in which food is accommodated. Further, the container cover 60 is defined as a part that is coupled to one side of the container body 100 to open and close the storage space.

That is, the storage container 50 may seal food in the storage space. For example, kimchi may be accommodated in the storage container 50. In this case, the storage container 50 may be referred to as kimchi container. Further, the refrigerator 1 in which the storage container 50 is placed may be called a kimchi refrigerator.

The container body 100 may have a box shape with an open top face. The container cover 60 is coupled to the open top of the container body 100. In detail, the container cover 60 is coupled to a top edge forming the top face of the container body 100.

The container cover 60 includes a cover body 62, a seal 64, a manipulating portion 66 and a fixed frame 68.

The cover body 62 is formed in a rectangular shape corresponding to the top surface of the container body 100. That is, the cover body 62 may be formed into a square plate having a predefined thickness.

In this connection, the cover body 62 has an extended cover 620 extending to the container body 100. The extended cover 620 extends from the edge of the cover body 62. That is, four extended covers 620 may be formed.

Further, the corner of the cover body 62 may be rounded for safety. Each of the extended covers 620 may be formed at each of four corners formed roundly. Accordingly, a space corresponding to one side of the cover body 62 is formed between adjacent extended covers 620.

The fixed frame 68 is coupled to the top of the container body 100. That is, the fixed frame 68 is embodied into a rectangular frame shape corresponding to the top face shape of the container body 100. Accordingly, the fixed frame 68 may be disposed between the container body 100 and the cover body 62.

Further, the manipulating portion 66 is defined as a component for fixing the cover body 62 and the fixed frame 68 to each other. The manipulating portion 66 can be pivotally coupled to the fixed frame 68. Accordingly, the fixed frame 68 has a groove 680 into which the manipulating portion 66 is coupled. A pivoting portion 660 to be inserted into the groove 680 is formed on the manipulating portion 66.

The manipulating portion 66 may be detachably coupled to the cover body 62. For example, the manipulating portion 65 may have a hook formed on a side thereof opposite to the pivoting portion 680 and fitted with the cover body 62. However, this is only an example. The manipulating portion 66 may be pivotally coupled to the cover body 62 and may be attached to or detached from the fixed frame 66.

Further, each manipulating portion 66 may be disposed between edges of the cover body 62. That is, four manipulating portions 66 are arranged and correspond to four sides of the cover body. In other words, each manipulating portion 68 is disposed between adjacent extended covers 620.

In detail, both ends of the manipulating portion 68 are in contact with adjacent extended covers 620 respectively. Further, a thickness of the manipulating portion 68 is equal to a thickness of the extended cover 620. Accordingly, when the manipulating portions 66 are coupled to the cover body 62, a neat appearance may be formed as shown in FIG. 3.

The seal 64 is installed between the container body 100 and the container cover 60 to function to seal therebetween. For example, the seal 64 is made of a rubber material to prevent leakage of food contained in the storage space. Further, smell of food can be prevented from leaking out of the storage container 40.

The shape and configuration of the container body 100 and container cover 60 are exemplary and not limited thereto. In particular, the container body 100 has a predefined shape to form a storage space therein.

FIG. 5 is a view showing a cross section taken along a line V-V' of FIG. 4. That is, FIG. 5 shows a cross section of the container body 100.

As shown in FIG. 5, the container body 100 has a plurality of layers. In other words, the container body 100 is formed by combining a plurality of layers formed of different materials.

In detail, the container body 100 includes an inner layer 110 forming an inner face and an outer layer 120 forming an outer face. That is, the inner layer 110 may form the inner face of the storage space, and thus may be defined as a part in contact with food. Further, the outer layer 120 is a layer forming the outer face of the storage space, and may be defined as a part combined with the inner layer 110.

In this connection, the inner layer 110 is made of titanium. The titanium is a material used for artificial bones and teeth and is a human-friendly material. Further, the titanium has excellent corrosion resistance. Accordingly, the titanium is used for artificial heart, leg bones and joints.

In particular, a titanium oxide film is formed on the surface of the titanium, and is very solid. Therefore, the corrosion into the inner layer is prevented. Even if such a film is destroyed, it will be regenerated immediately. Further, titanium is known to have excellent corrosion resistance to chlorine ions.

Accordingly, the container made of the titanium may accommodate food safely, and does not corrode when contact a food containing a lot of chlorine such as kimchi. As a result, the user can store therein food safely, thereby increasing the convenience of the user.

The outer layer 120 is made of aluminum. The aluminum has a low density, is very lightweight and is cost-competitive. Further, the aluminum has good elongation and good workability.

Accordingly, the storage container 50 according to the present disclosure has the inner layer of titanium, and the outer layer of aluminum. As a result, food can be safely stored therein, and a lightweight and inexpensive storage container 50 can be obtained.

Each of the inner layer 110 and the outer layer 120 has a shape of a plate having a predefined thickness. In addition, the inner layer 110 and the outer layer 120 are bonded to each other while facing each other, and may be machined into a predefined shape.

In this connection, as shown in FIG. 5, the outer layer 120 is thicker than the inner layer 110. In detail, a thickness b of the outer layer 120 may be three to four times a thickness a of the inner layer 110. For example, the thickness a of the inner layer 110 may be 0.2 mm, and the thickness b of the outer layer 120 may be 0.6 mm.

This thickness configuration may ensure the rigidity while minimizing the thickness of the inner layer 110. Minimizing the thickness of the inner layer 110 is to improve moldability together with the cost and weight savings.

In this connection, the top edge of the container body has a coupled potion 150 made of a combination of the inner layer 110 and the outer layer 120. The coupled potion 150 is defined as a portion of the combination of the inner layer 110 and the outer layer 120 as bent downwardly.

Further, the coupled potion 150 may be defined as a part coupled with the container cover 60. Referring to FIG. 5, the coupled potion 150 extends outwardly from the storage space formed in the container body 100. In other words, the coupled potion 150 defined a top edge portion forming an open top of the container body 100.

In this connection, in the coupled potion 150, the combination of the inner layer 110 and the outer layer 120 is exposed outwardly. When different materials are bonded to each other at the coupled portion, corrosion is most likely at the coupled potion. Further, as the bonded potion is exposed outwardly, the bonding therebetween may be weakened and they may be separated from each other by external shock. That is, in the coupled portion 150, the inner layer and outer layer may be separated from each other.

Further, the container body 100 includes a coating layer 130 formed to cover the outer layer 120 or the inner layer 110. In particular, the coating layer 130 is formed to cover the coupled potion 150. Accordingly, the coupled potion 150 as the combination of the inner layer 110 and the outer layer 120 is prevented from being exposed to the outside.

Further, the coating layer 130 may be formed to cover the outer face of the outer layer 120. Accordingly, as illustrated in FIG. 5, the inner layer 110, the outer layer 120, and the coating layer 130 may be sequentially stacked. Such a coating layer 130 may be defined as a portion forming an appearance of the storage container 50.

In this connection, the coating layer 130 may be formed of ceramic. The ceramic coating may have a variety of colors to provide a beautiful appearance. Further, as the coating is formed on an entire outer face of the container body 100, the coating can reinforce the rigidity.

Hereinafter, the manufacturing process of the container body 100 will be described.

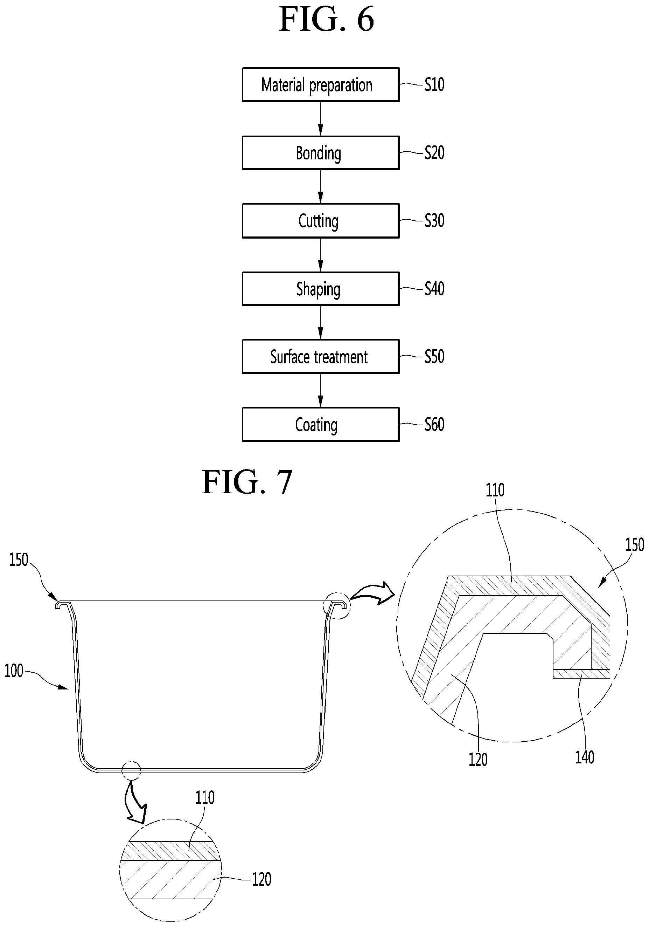

FIG. 6 is a view showing the manufacturing process of the storage container according to an embodiment of the present disclosure. In particular, FIG. 6 illustrates the manufacturing process of the container body 100.

As shown in FIG. 6, there is provided a step of preparing components forming the container body 100 S10. In this connection, the components may be titanium and aluminum plates forming the inner layer 110 and the outer layer 120 respectively. For example, titanium and aluminum roll sheets may be provided.

As described above, the thickness of the titanium plate is smaller than the thickness of the aluminum plate. In detail, the titanium plate is as thin as possible. Further, the aluminum plate has the smallest thickness within a design limit for machining or rigidity.

Then, the aluminum plate and the titanium plate are bonded to each other S20. In detail, a cladding process may be performed in which two plates are stacked and are rolled at a high temperature to form a laminate. Accordingly, the aluminum plate and the titanium plate are pressed and joined to each other.

Then, the bonded aluminum plate and titanium plate is cut to a predefined size and S30, and machined into a predefined shape S40. The bonded laminate is machined into a container shape having an internal space. In this connection, the titanium plate defines an inner face while the aluminum plate defines an outer face. That is, the titanium inner layer 110 and the aluminum outer layer 120 are formed.

Then, an inner surface of the inner layer 110 and an outer surface of the outer layer 120 are treated S50. In detail, foreign matter adhering to the surfaces of the inner layer 110 and the outer layer 120 is removed therefrom, and an oxide film is formed thereon. As the coating, a titanium oxide film is formed on the inner layer 110 and an aluminum oxide film is formed on the outer layer 120.

Then, a coating layer 130 is formed S60. Specifically, the ceramic is spray-coated on the outer layer 120 and the coupled potion 150. Such a ceramic coating may form a coating film on the outer face to secure anti-scratch property and implement various colors.

The container body 100 formed as described above may be assembled with a separately manufactured container cover 60 to form a storage container 50. Then, the container may be provided as a separate product or may be accommodated in the refrigerator 1.

FIG. 7 is a diagram showing another embodiment of a cross section taken along a line V-V' of FIG. 4. That is, FIG. 7 is a view showing a cross section of the container body 100 according to another embodiment. In this connection, the same reference numerals are used for the same components as described above, and the description thereof is omitted.

As shown in FIG. 7, the coating layer 140 may be formed only on the coupled potion 150. That is, the coating layer 140 is formed to cover the coupled potion 150 as a combination of the inner layer 110 and the outer layer 120 defining a top edge of the container body 100. In other words, the coating layer 140 is formed to cover the inner layer 110 and the outer layer 120.

The coating layer 140 may be free of a function of forming an appearance such as the coating layer 130 described above, and may be defined as a component for preventing corrosion of the coupled potion 150. That is, the container body 100 may be formed while minimizing the coating layer 140.

In this connection, the coating layer 140 may be made of engineering plastic. The engineering plastic is a workable and corrosion resistant material. Accordingly, the engineering plastic layer may be formed only on the coupled potion 150. Further, the corrosion of the coupled potion 150 can be effectively prevented.

As such, as the outer layer 120 is made of aluminum, various coating layers 130 and 140 may be formed thereon.

While the present disclosure has been described with reference to preferred embodiments, those skilled in the art will appreciate that the present disclosure may be variously modified and changed without departing from the scope of the present disclosure set forth in the following claims.

## Claims

1. A storage container (50) including:
a container body (100) having a storage space defined therein for receiving food therein; and
a container cover (60) coupled to one side of the container body (100) to open and close the storage space, wherein the container body (100) includes:
an inner layer (110) forming an inner face of the container body (100) defining the inner space;
an outer layer (120) bonded to the inner layer (110) and forming an outer face of the container body (100); and
a coating layer (130, 140),
wherein the inner layer (110) is made of titanium, and the outer layer (120) is made of aluminum,
wherein the inner layer (110) and the outer layer (120) are bonded to each other while being in close contact with each other,
wherein the coating layer (130, 140) is formed on an outer face of the outer layer (120) such that the inner layer (110), the outer layer (120) and the coating layer (130, 140) are stacked in this order,
**characterized in that**
the coating layer (130, 140) covers a coupled portion (150) extended downwardly and outwardly from a top edge of the container body (100) such that the coupled portion (150) as the combination of the inner layer (110) and the outer layer (120) is prevented from being exposed to the outside,
wherein the coupled portion (150) is defined as a portion of the combination of the inner layer (110) and the outer layer (120) as bent downwardly.

2. The storage container of claim 1, wherein the outer layer (120) is thicker than the inner layer (110).

3. The storage container of claim 1 or 2, wherein a thickness of the outer layer (120) is three to four times larger than a thickness of the inner layer (110).

4. The storage container of any one of the preceding claims, wherein a thickness of the inner layer (110) is 0.2mm, and/or a thickness of the outer layer (120) is 0.6mm.

5. The storage container of any one of the preceding claims, wherein the coating layer (130) is made of ceramic.

6. The storage container of any one of the preceding claims, wherein the coating layer (140) is made of plastic.

7. The storage container of any one of the preceding claims, wherein the coupled portion (150) is provided for being coupled to the container cover (60).

8. A refrigerator including:
a refrigerator body (10);
a storage chamber (20) defined in the refrigerator body (10); and
at least one storage container (50) as claimed in any one of the preceding claims and disposed in the storage chamber (20) to accommodate food therein.

9. The refrigerator of claim 8, wherein the container body (100) has a ceramic coating layer (130) formed on an outer face of the outer layer (120), wherein the coating layer (130) is in contact with the storage chamber (20).

10. The refrigerator of claim 8 or 9, wherein each of the inner layer (110) and the outer layer (120) is formed of a plate, wherein a thickness of the inner layer (110) is smaller than a thickness of the outer layer (120).

## Patentansprüche

1. Vorratsbehälter (50), der Folgendes umfasst:
einen Behälterkörper (100), der einen darin definierten Vorratsraum zum Aufnehmen von Lebensmitteln aufweist; und
einen Behälterdeckel (60), der mit einer Seite des Behälterkörpers (100) gekoppelt ist, um den Vorratsraum zu öffnen und zu schließen, wobei der Behälterkörper (100) Folgendes umfasst:
eine innere Lage (110), die eine Innenseite des Behälterkörpers (100), der den Innenraum definiert, bildet;
eine äußere Lage (120), die mit der inneren Lage (110) verbunden ist und eine Außenseite des Behälterkörpers (100) bildet; und
eine Beschichtungslage (130, 140),
wobei die innere Lage (110) aus Titan hergestellt ist und die äußere Lage (120) aus Aluminium hergestellt ist,
wobei die innere Lage (110) und die äußere Lage (120) miteinander verbunden sind, wobei sie in direktem Kontakt miteinander sind,
wobei die Beschichtungslage (130, 140) auf einer Außenseite der äußeren Lage (120) ausgebildet ist, so dass die innere Lage (110), die äußere Lage (120) und die Beschichtungslage (130, 140) in dieser Reihenfolge angeordnet sind,
**dadurch gekennzeichnet, dass**
die Beschichtungslage (130, 140) einen gekoppelten Abschnitt (150) bedeckt, der sich von einer Oberkante des Behälterkörpers (100) nach unten und nach außen erstreckt, so dass verhindert wird, dass der gekoppelte Abschnitt (150) als Kombination der inneren Lage (110) und der äußeren Lage (120) nach außen freiliegt,
wobei der gekoppelte Abschnitt (150) als ein Abschnitt der Kombination der inneren Lage (110) und der äußeren Lage (120), der nach unten gebogen ist, definiert ist.

2. Vorratsbehälter nach Anspruch 1, wobei die äußere Lage (120) dicker als die innere Lage (110) ist.

3. Vorratsbehälter nach Anspruch 1 oder 2, wobei eine Dicke der äußeren Lage (120) um das Drei- bis Vierfache größer als eine Dicke der inneren Lage (110) ist.

4. Vorratsbehälter nach einem der vorhergehenden Ansprüche, wobei eine Dicke der inneren Lage (110) 0,2 mm beträgt und/oder eine Dicke der äußeren Lage (120) 0,6 mm beträgt.

5. Vorratsbehälter nach einem der vorhergehenden Ansprüche, wobei die Beschichtungslage (130) aus Keramik gebildet ist.

6. Vorratsbehälter nach einem der vorhergehenden Ansprüche, wobei die Beschichtungslage (140) aus Kunststoff gebildet ist.

7. Vorratsbehälter nach einem der vorhergehenden Ansprüche, wobei der gekoppelte Abschnitt (150) dafür vorgesehen ist, dass er mit dem Behälterdeckel (60) gekoppelt wird.

8. Kühlschrank, der Folgendes umfasst:
einen Kühlschrankkörper (10);
eine Vorratskammer (20), die im Kühlschrankkörper (10) definiert ist; und
wenigstens einen Vorratsbehälter (50) nach einem der vorhergehenden Ansprüche, der in der Vorratskammer (20) zum Aufnehmen von Lebensmitteln angeordnet ist.

9. Kühlschrank nach Anspruch 8, wobei der Behälterkörper (100) eine keramische Beschichtungslage (130) hat, die auf einer Außenseite der äußeren Lage (120) ausgebildet ist, wobei die Beschichtungslage (130) mit der Vorratskammer (20) in Kontakt ist.

10. Kühlschrank nach Anspruch 8 oder 9, wobei die innere Lage (110) und die äußere Lage (120) aus einer Platte gebildet sind, wobei eine Dicke der inneren Lage (110) kleiner als eine Dicke der äußeren Lage (120) ist.

## Revendications

1. Contenant de stockage (50) incluant :
un corps de contenant (100) ayant un espace de stockage défini dans celui-ci pour recevoir des aliments dans celui-ci ; et
un couvercle de contenant (60) couplé à un côté du corps de contenant (100) pour ouvrir et fermer l'espace de stockage, dans lequel le corps de contenant (100) inclut :
une couche intérieure (110) formant une face intérieure du corps de contenant (100) définissant l'espace intérieur ;
une couche extérieure (120) liée à la couche intérieure (110) et formant une face extérieure du corps de contenant (100) ; et
une couche de revêtement (130, 140),
dans lequel la couche intérieure (110) est constituée de titane et la couche extérieure (120) est constituée d'aluminium,
dans lequel la couche intérieure (110) et la couche extérieure (120) sont liées l'une à l'autre tout en étant en contact direct l'une avec l'autre,
dans lequel la couche de revêtement (130, 140) est formée sur une face extérieure de la couche extérieure (120) de telle sorte que la couche intérieure (110), la couche extérieure (120) et la couche de revêtement (130, 140) sont superposées dans cet ordre,
**caractérisé en ce que**
la couche de revêtement (130, 140) recouvre une partie couplée (150) s'étendant vers le bas et vers l'extérieur à partir d'un bord supérieur du corps de contenant (100) de telle sorte que la partie couplée (150) en tant que combinaison de la couche intérieure (110) et de la couche extérieure (120) est empêchée d'être exposée à l'extérieur,
dans lequel la partie couplée (150) est définie comme une partie de la combinaison de la couche intérieure (110) et de la couche extérieure (120) pliée vers le bas.

2. Contenant de stockage selon la revendication 1, dans lequel la couche extérieure (120) est plus épaisse que la couche intérieure (110).

3. Contenant de stockage selon la revendication 1 ou 2, dans lequel une épaisseur de la couche extérieure (120) est trois à quatre fois plus grande qu'une épaisseur de la couche intérieure (110).

4. Contenant de stockage selon l'une quelconque des revendications précédentes, dans lequel une épaisseur de la couche intérieure (110) est de 0,2 mm et/ou une épaisseur de la couche extérieure (120) est de 0,6 mm.

5. Contenant de stockage selon l'une quelconque des revendications précédentes, dans lequel la couche de revêtement (130) est constituée d'une céramique.

6. Contenant de stockage selon l'une quelconque des revendications précédentes, dans lequel la couche de revêtement (140) est constituée d'une matière plastique.

7. Contenant de stockage selon l'une quelconque des revendications précédentes, dans lequel la partie couplée (150) est prévue pour être couplée au couvercle de contenant (60).

8. Réfrigérateur incluant :
un corps de réfrigérateur (10) ;
une chambre de stockage (20) définie dans le corps de réfrigérateur (10) ; et
au moins un contenant de stockage (50) selon l'une quelconque des revendications précédentes et disposé dans la chambre de stockage (20) pour recevoir des aliments dans celui-ci.

9. Réfrigérateur selon la revendication 8, dans lequel le corps de contenant (100) a une couche de revêtement en céramique (130) formée sur une face extérieure de la couche extérieure (120), dans lequel la couche de revêtement (130) est en contact avec la chambre de stockage (20).

10. Réfrigérateur selon la revendication 8 ou 9, dans lequel chaque couche parmi la couche intérieure (110) et la couche extérieure (120) est formée d'une plaque, dans lequel une épaisseur de la couche intérieure (110) est plus petite qu'une épaisseur de la couche extérieure (120).
